# EUROPEAN PATENT APPLICATION

(11) **EP 2 733 665 A1**
(43) Date of publication of application: **21.05.2014**
(21) Application number: 12193286.7
(22) Date of filing: 19.11.2012
(51) Int. Cl.: G06T 7/00

(54) **Method for determination of the fitting accuracy between two models of surface structures**

(71) Applicant: Universitätsklinikum Jena, 07743 Jena (DE)
(72) Inventor: Schäfer, Oliver, Dr. med. dent., 07743 Jena (DE); Güntsch, Arndt, Dr. med. dent. habil., 99096 Erfurt (DE)
(74) Representative: Schulz Junghans

(57) **Abstract**

The present invention discloses a method for determination of the fitting accuracy between two models of surface structures, wherein each model comprises a plurality of points, each point being defined by a first coordinate, a second coordinate and a third coordinate in a three-dimensional coordinate system, and wherein each point of the first model is associated to a point of the second model, wherein the first model is inverted and a deviation between the inverted first model and the second model is determined, wherein determining said deviation comprises the steps of aligning the inverted first model and the second model in a three-dimensional coordinate system in such a way that the model-to-model penetration is maximal and determining the respective difference of each point of the inverted first model and the associated point of the second model. After determining the differences between said points, the inverted first model or the second model is adjusted for reducing the model-to-model penetration and a determination of said differences is performed again, wherein said fitting accuracy is determined from the differences, and wherein said adjusting is performed by adding a first adjusting value to the first coordinate of each point of the model to be adjusted and a second adjusting value to the second coordinate of each point of the model to be adjusted and a third adjusting value the third coordinate of each point of the model to be adjusted.

## Description

The instant invention relates to a method for determination of the fitting accuracy between two models of surface structures and a computer program product which is configured to conduct said method.

Manufacturing dental restorations, such as crowns, bridges and other dental prostheses, requires a dentist to prepare teeth. The resulting preparations can be duplicated by precise impressions, upon which models are cast, that allow a dental technician to create the aforementioned types of restorations. Additionally, digital workflows can be employed to design (CAD) and manufacture (CAM) dental restorations. Since these processes involve different kinds of working materials, all of which feature different dimensional accuracies, dentists frequently discover fitting imperfections when placing the manufactured restorations.

In this context, poor adaption might lead to marginal discoloration, exposure of luting resin, dissolution of cement, microleakage, increased plaque retention and secondary decay, a variety of clinical trials and in vitro studies have been conducted to examine marginal and internal gap sizes.

Acceptable fit-discrepancies have been reported to range from 50µm to 150µm. Although restorations may undergo complex three-dimensional form changes during their laboratory fabrication process, marginal and internal discrepancies have generally been evaluated in a one- or two-dimensional context. In particular, specimens are sectioned to evaluate internal and marginal gap sizes by either optical or scanning electron microscopy. Common sample sizes range from 5 to 10 specimens per group, with 2-150 different measuring locations, selected in a systematic or random manner. In recent years an increase of the use of digital dentistry including the use of three-dimensional representations of teeth and restorations is recognizable.

Based on this background, it is the objective of the present invention to provide a precise method for determination of the fitting accuracy between two three-dimensional models of surface structures. The objective is attained by the subject matter of the independent claim.

According to a first aspect of the invention a method for determination of the fitting accuracy between two models of surface structures is provided. Each model comprises a plurality of points, each point being defined by a first coordinate, a second coordinate and a third coordinate, e.g. the x, y and z coordinate, in a three-dimensional coordinate system, and wherein each point of the first model is associated or assigned to a point of the second model. Initially the first model is inverted, wherein the sign of one of the coordinates of each point of said first model is inverted and the coordinate is identical for each point of said first model. Afterwards a deviation between the inverted first model and the second model is determined wherein determining said deviation comprises the steps of aligning the inverted first model and the second model in a three-dimensional coordinate system in such a way that the model-to-model penetration is maximal and determining the respective difference of each point of the inverted first model and the associated point of the second model. Then after determining the differences between said points, the inverted first model or the second model is adjusted for reducing the model-to-model penetration and a determination of said differences is performed again, wherein said fitting accuracy is determined from the differences, and wherein said adjusting is performed by adding a first adjusting value to the first coordinate of each point of the model to be adjusted and a second adjusting value to the second coordinate of each point of the model to be adjusted and a third adjusting value the third coordinate of each point of the model to be adjusted.

The term "model" is intended to refer to any three-dimensional surface map of an object, such as a point cloud of surface data, a set of two-dimensional polygons, or any other data representing the whole or a part of the surface of an object, as might be obtained through the capture and/or processing of three-dimensional scan data.

According to yet another embodiment, said aligning comprises determining the root mean square value of said differences, and wherein said aligning is performed in such a way that said root mean square value is minimal. Of course every other statistical measure of the magnitude of a varying quantity can also be used.

According to another embodiment, determining said adjusting values is performed by determining the mean of said differences before adjusting the model to be adjusted, wherein said mean is particularly selected form the group comprised of median, arithmetic mean, geometric mean, root mean square, cubic mean, harmonic mean, logarithmic mean, generalized mean and mode. Preferably, the first adjusting value is determined by determining the mean of the first coordinate of each point, the second adjusting value is determined by determining the mean of the second coordinate of each point and the third adjusting value is determined by determining the mean of the third coordinate of each point.

According to another embodiment, those differences of said differences that are above the 70-percentile, 75-percentile, 80-percentile, 85-percentile, 90-percentile or 95-percentiles and below the 5-percentile, 10-percentile, 15-percentile, 20-percentile, 25-percentile or 30-percentile of said differences are excluded from determining said mean.

According to another embodiment, the fitting accuracy is determined as the mean of the differences determined after said adjusting of the model to be adjusted, wherein said mean is particularly selected form the group comprised of median, arithmetic mean, geometric mean, root mean square, cubic mean, harmonic mean, logarithmic mean, generalized mean and mode. Preferably, a dentist may specify fitting accuracy of the dental object. Measuring a dimensional accuracy may include quantifying fitting accuracy of the dental object. Measuring a dimensional accuracy includes measuring quality of a margin.

In another preferred embodiment said inverted first model or said second model is a model of the surface structure of a tooth. Also preferably, said method can be used in every other environment where precise, three-dimensional data is processed, including orthopedics, digital animation, and customized manufacturing.

According to another embodiment, the inverted first model or the second model is a model of the surface structure of a dental restoration which may be generally understood to include components that restore the structure or function of existing dentition or dental implants, such as crowns, bridges, bars, veneers, inlays, onlays, amalgams, composites, and various substructures such as copings and the like, implant abutments, as well as temporary restorations for use while a permanent restoration is being fabricated.

According to another embodiment, said differences are graphically depicted. Preferably, the depiction is visualized on a display which may include any display suitable for video or other rate rendering at a level of detail corresponding to the acquired data. Suitable displays include cathode ray tube displays, liquid crystal displays, light emitting diode displays and the like. In addition, where three-dimensional visualization is desired, the display may include a three-dimensional display using a wide variety of techniques including stereo pair imaging, holographic imaging, and multiplanar or volumetric imaging, each with a number of rendering modalities that may be usefully employed with the method described herein.

According to second aspect of the invention, a computer program product, which is designed to be executed on a computer, is provided. The computer program product is configured to conduct the method according to the invention, when executed on a computer. The computer may be, for example, a personal computer or any other electronic data processing device.

### Example

Figure 1 shows the digitalization of a prepared tooth.
Figure 2 shows the digitalization of a dental restoration.
Figure 3 shows the aligning of a three-dimensional model of a prepared tooth and a three-dimensional model of a dental restoration.

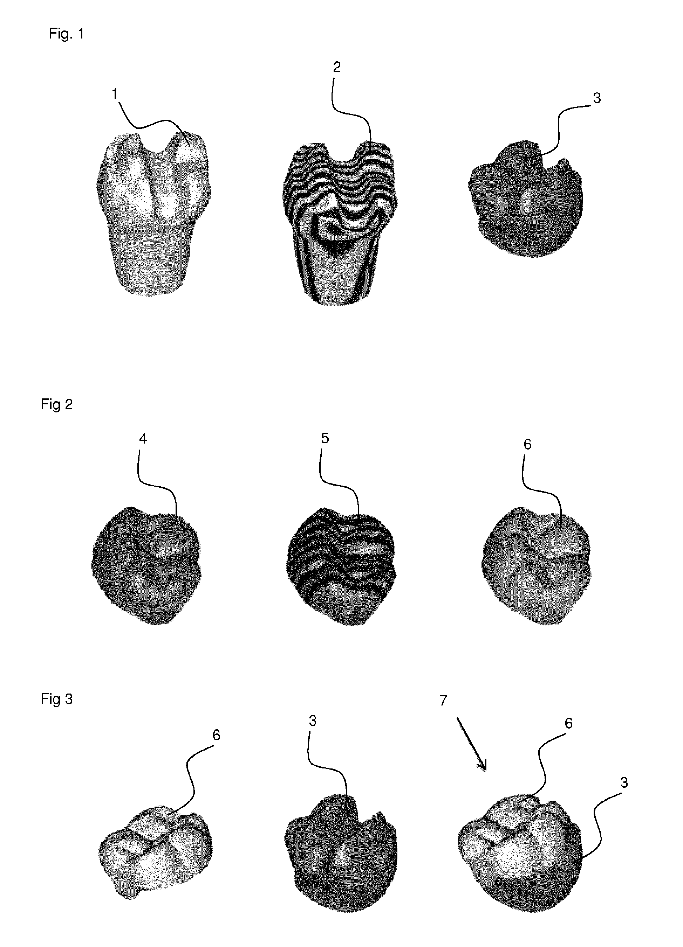

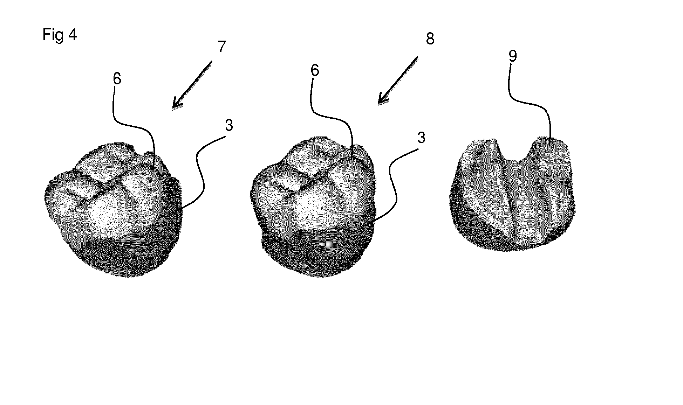

Figure 3 shows the adjusting of one three-dimensional model for reducing the model-to-model penetration and a color-coded difference image.

A prepared tooth 1 and the fabricated dental restoration 4 are digitized 2, 5, with a structure light scanner, e.g. featuring a measurement-uncertainty of 4 µm and a homogenous measuring-point-distance of 5 µm.

Single light bands are projected onto the respective tooth- 2 and restoration-surfaces 5 and simultaneously recorded. Triangulation routines allow the calculation of data points from the captured images that can be displayed in a common Cartesian coordinate system (with x, y and z-coordinates). Three data points are combined to form triangles, leading to highly accurate virtual representations of the digitalized objects 3, 6. Datasets for each restoration 6 and the reference tooth 3 are computed and saved in a STL format (Surface Tessellation Language, standard for CAD/CAM data exchange).

To compare congruent areas, surface normals (z-coordinates of each point of the surface) of the virtual preparation are inverted. Afterwards, STL records of the preparation 6 and restorations 3 were superimposed one 6 on the other 3 by computing all possible orientations and selecting the one with the best object-to-object penetration 7 (so called Best-Fit method). In other words, the inverted first model 3 and the second model 6 are aligned in such a way that the model-to-model penetration is maximal 7. Afterwards the respective difference of each point of the inverted first model 3 and the associated point of the second model 6 is determined.

After determining the differences, the inverted first model 3 or the second model 6 is adjusted again 8 for reducing the model-to-model penetration. The adjusting 8 is performed by adding a first adjusting value to the first coordinate of each point of the model 3, 6 to be adjusted and a second adjusting value to the second coordinate of each point of the model to be adjusted 6, 3 and a third adjusting value the third coordinate of each point of the model to be adjusted 6, 3. Afterwards a determination of the differences is performed again.

Finally, color-coded difference images 9 are used to examine the congruency of preparation 1 and restorations 4 qualitatively. Dimensional differences between the dental restoration 4 and the tooth 1 are computed for every data point captured during digitalization 2, 5. The mean quadratic deviation (root mean square, RMS) is calculated. RMS serves as a measure of how far deviations between two different datasets vary from zero.

As a result of graphical congruency analyses, either the preparation 1 or the restoration 4 can be adjusted, e.g. by removing high spots. The aforementioned procedure can then be repeated, until a clinically acceptable fit is achieved.

## Claims

1. Method for determination of the fitting accuracy between two models of surface structures (3, 6), wherein each model (3, 6) comprises a plurality of points, each point being defined by a first coordinate, a second coordinate and a third coordinate in a three-dimensional coordinate system, and wherein each point of the first model (3) is associated to a point of the second model (6), wherein
- the first model (3) is inverted and
- a deviation between the inverted first model (3) and the second model (6) is determined, wherein determining said deviation comprises the steps of
- aligning (7) the inverted first model (3) and the second model (6) in a three-dimensional coordinate system in such a way that the model-to-model penetration is maximal, and
- determining the respective difference of each point of the inverted first model (3) and the associated point of the second model (6),
**characterized in that**,
after determining the differences between said points, the inverted first model (3) or the second model (6) is adjusted (8) for reducing the model-to-model penetration and a determination of said differences is performed again, wherein said fitting accuracy is determined from the differences, and wherein said adjusting (8) is performed by adding a first adjusting value to the first coordinate of each point of the model (3, 6) to be adjusted and a second adjusting value to the second coordinate of each point of the model (3, 6) to be adjusted and a third adjusting value the third coordinate of each point of the model (3, 6) to be adjusted.

2. Method according to claim 1, wherein said aligning (7) comprises determining the root mean square value of said differences, and wherein said aligning (7) is performed in such a way that said root mean square value is minimal.

3. Method according to claim 1 or 2, wherein determining said adjusting (7) values is performed by determining the mean of said differences before adjusting the model (3, 6) to be adjusted, wherein said mean is particularly selected form the group comprised of median, arithmetic mean, geometric mean, root mean square, cubic mean, harmonic mean, logarithmic mean, generalized mean and mode.

4. Method according to claim 3, wherein those differences of said differences that are above the 70-percentile, 75-percentile, 80-percentile, 85-percentile, 90-percentile or 95-percentiles and below the 5-percentile, 10-percentile, 15-percentile, 20-percentile, 25-percentile or 30-percentile of said differences are excluded from determining said mean.

5. Method according to one of the preceding claims, wherein the fitting accuracy is determined as the mean of the differences determined after said adjusting (7) of the model to be adjusted (3, 6), wherein said mean is particularly selected from the group comprised of median, arithmetic mean, geometric mean, root mean square, cubic mean, harmonic mean, logarithmic mean, generalized mean and mode

6. Method according to one of the preceding claims, wherein said inverted first model (3) or said second model (6) is a model of the surface structure of a tooth (1).

7. Method according to one of the preceding claims, wherein said inverted first model (3) or said second model (6) is a model of the surface structure of a dental restoration (4).

8. Method according to one of the preceding claims, wherein said differences are depicted (9).

9. Computer program product, which is designed to be executed on a computer, wherein said computer program product is configured to conduct the method according to one of the preceding claims, when executed on a computer.
